# EUROPEAN PATENT APPLICATION

(11) **EP 1 847 953 A2**
(43) Date of publication of application: **24.10.2007**
(21) Application number: 07251645.3
(22) Date of filing: 19.04.2007
(51) Int. Cl.: G06Q 30/00

(54) **Ordering support system, ordering support apparatus, device monitoring apparatus, ordering support method, device monitoring method, and computer-readable medium**

(30) Priority: 19.04.2006 JP 2006115802; 30.03.2007 JP 2007093639
(71) Applicant: Ricoh Company, Ltd., Tokyo 143-8555 (JP)
(72) Inventor: Takahashi, Masato, Yokohama-shi Kanagawa (JP); Nagai, Keiji, Kawasaki-shi Kanagawa (JP); Nakamura, Yutaka, Yokohama-shi Kanagawa (JP); Dan, Koji, Yokohama-shi Kanagawa (JP); Takeda, Kenichi, Kawasaki-shi Kanagawa (JP); Hyakutake, Shogo, Yokohama-shi Kanagawa (JP); Takahashi, Fujio, Shibuya-ku Tokyo (JP)
(74) Representative: Leeming, John Gerard

(57) **Abstract**

An ordering support system is disclosed. The ordering support system includes a device monitoring apparatus that retrieves a device information item about a device connected to a network and a status information item about a consumable of the device, determines whether the consumable is depleted based on the status information item, and sends, if the consumable is determined to be depleted, the device information item and the status information item to an ordering support apparatus. The ordering support system further includes the ordering support apparatus that receives the device information item and the status information item from the device monitoring apparatus, creates an electronic mail message including a URL indicating a Web page for ordering the consumable determined to be depleted, and sends the electronic mail message to a pre-registered mail address associated with the device.

## Description

### BACKGROUND OF THE INVENTION

### 1. Field of the Invention

The present invention generally relates to an ordering support system, an ordering support apparatus, a device monitoring apparatus, an ordering support method, a device monitoring method, and a computer-readable medium, and particularly relates to an ordering support system, an ordering support apparatus, a device monitoring apparatus, an ordering support method, a device monitoring method, and a computer-readable medium that support ordering device consumables.

### 2. Description of the Related Art

In company offices, there are devices such as printers, copiers, facsimile machines, compound machines including these machines' functions in one physical body, and they are connected to each other via a network.

As these devices are equipped with consumables that are depleted (or wear out) by use of the devices, they maintain their functions through proper replacement of the consumables. In the case of printers, for example, consumables include toners, fixing units, waste toner bottles, photoreceptors, developers, etc., and are commonly called supplies.

It is difficult to know the remaining amount or remaining service life of supplies from the outside of the devices. Therefore, for instance, users notice a depletion of toner only after receiving an error message in response to a,print command, and then replace toners. In order to reduce such user inconveniences, there has been proposed a technology of detecting the remaining service life of a supply and displaying information about the supply on an operations panel or printing the information onto paper. There has also been a technology of causing a device to send a signal indicating a need for supply replacement at a remote site so as to cause sending a maintenance operator to the office where the device is installed.

<Patent Document 1> Japanese Patent Laid-Open Publication No. 10-198236

<Patent Document 2> Japanese Patent Laid-Open Publication No. 2003-345560

However, even if the remaining service life of a supply is detected, in the case where a user himself places a supply order and replaces supplies, the user needs to know the exact model number of the supply to be replaced before placing the order. That is, the user needs to go through such troublesome work before placing the supply order. Moreover, if the user wishes to place an order afterward, the order acceptable period might be dependent on business hours of the vendor's sales office. Furthermore, in the case of an ordering system for sending a maintenance operator, costs associated therewith such as labor cost and delivering cost are added.

### SUMMARY OF THE INVENTION

In view of the foregoing, the present invention is directed to an ordering support system, an ordering support apparatus, a device monitoring apparatus, an support method, a device monitoring method, and a computer-readable medium that facilitate replenishment of consumables in a device.

According to an aspect of the present invention, there is provided an ordering support system comprising: a device monitoring apparatus that retrieves a device information item about a device connected to a network and a status information item about a consumable of the device, determines whether the consumable is depleted based on the status information item, and sends, if the consumable is determined to be depleted, the device information item and the status information item to an ordering support apparatus; and the ordering support apparatus that receives the device information item and the status information item from the device monitoring apparatus, creates an electronic mail message including a URL indicating a Web page for ordering the consumable determined to be depleted, and sends the electronic mail message to a pre-registered mail address associated with the device.

According to another aspect of the present invention, there is provided an ordering support system comprising: a device monitoring apparatus that retrieves a device information item about a device connected to a network and a status information item about a consumable of the device, and sends the device information item and the status information item to an ordering support apparatus; and the ordering support apparatus that receives the device information item and the status information item from the device monitoring apparatus, determines whether the consumable is depleted based on the status information item, creates, if the consumable is determined to be depleted, an electronic mail message including a URL indicating a Web page for ordering the consumable determined to be depleted, and sends the electronic mail message to a pre-registered mail address associated with the device.

These ordering support systems can facilitate replenishment of consumables in a device.

### BRIEF DESCRIPTION OF THE DRAWINGS

FIG. 1 is a diagram showing a configuration example of an ordering support system according to an embodiment of the present invention;
FIG. 2 is a flowchart showing a procedure of processing executed by a client PC according to a monitoring program;
FIG. 3 is a sequence diagram showing a procedure of user registration in an ordering support system;
FIG. 4 is an example of a user registration page;
FIG. 5 is an example of a detected device list page;
FIG. 6 is a sequence diagram showing a procedure of device monitoring in an ordering support system;
FIG. 7 is a configuration example of a depletion notification information item;
FIG. 8 is an example of notification mail;
FIG. 9 is an example of an order page; and
FIG. 10 is a flowchart showing a procedure of determining whether to send depletion notification mail.

### DETAILED DESCRIPTION OF THE PREFERRED EMBODIMENT

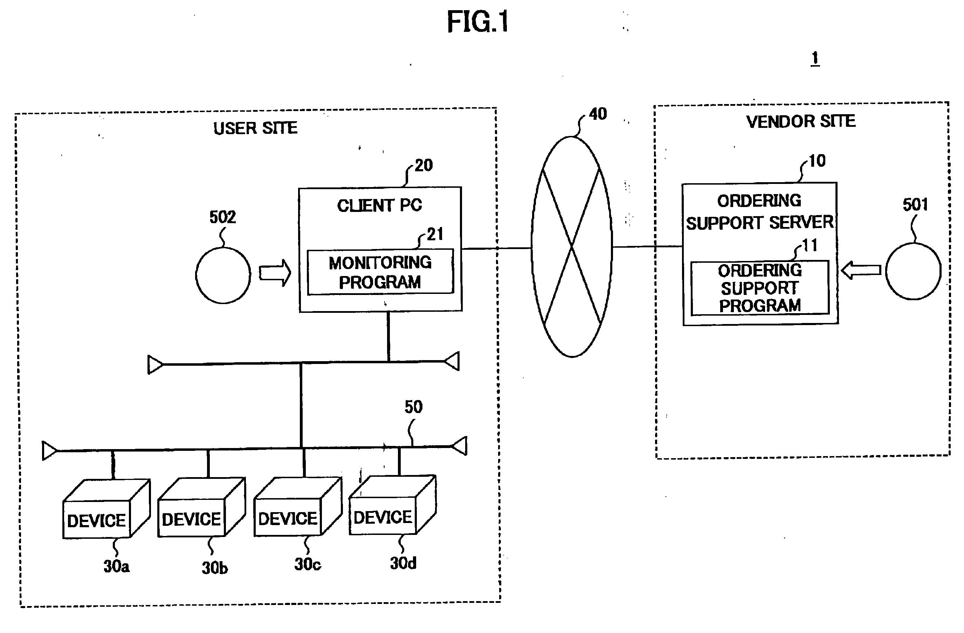

The following describes preferred embodiments of the present invention with reference to the accompanying drawings. FIG. 1 is a diagram showing a configuration example of an ordering support system 1 according to an embodiment of the present invention. With reference to FIG. 1, the ordering support system 1 comprises an ordering support server 10, a client PC 20, and devices 30a, 30b, 30c, and 30d (also referred to collectively as "devices 30"). The ordering support server 10 is installed at a vendor site (the site of a supplier of consumables for the devices 30 (e.g. a site of a manufacturer of consumables)), while the client PC 20 and the devices 30 are installed at a user site (the site of users of the devices 30 (e.g. an office). The ordering support server 10 is connected to the client PC 20 via a wide area network 40 such as the Internet. The client PC 20 is connected to the devices 30 via a network (which may or may not be wireless) such as a LAN (Local Area Network) built at the user site.

The devices 30 may be, e.g., image forming apparatuses, such as common printers and compound machines that form images using toner and ink. In this embodiment, the devices 30 support MIB (Management Information Base) and are able to respond to retrieval requests for MIB information received via a network based on the SNMP (Simple Network Management Protocol). In this embodiment, the devices 30 are also able to detect status information items of consumables. The status information item may be qualitative information (normal/near end/end) or may be quantitative information (100%, 90%, ... 10%, 0%).

The client PC 20 is a general-purpose computer in which a monitoring program 21 is installed. The monitoring program 21 may be installed from a recording medium 502 such as a CD-ROM, or may be downloaded via the network 40. In this embodiment, the monitoring program 21 is downloaded via the network 40 as described below.

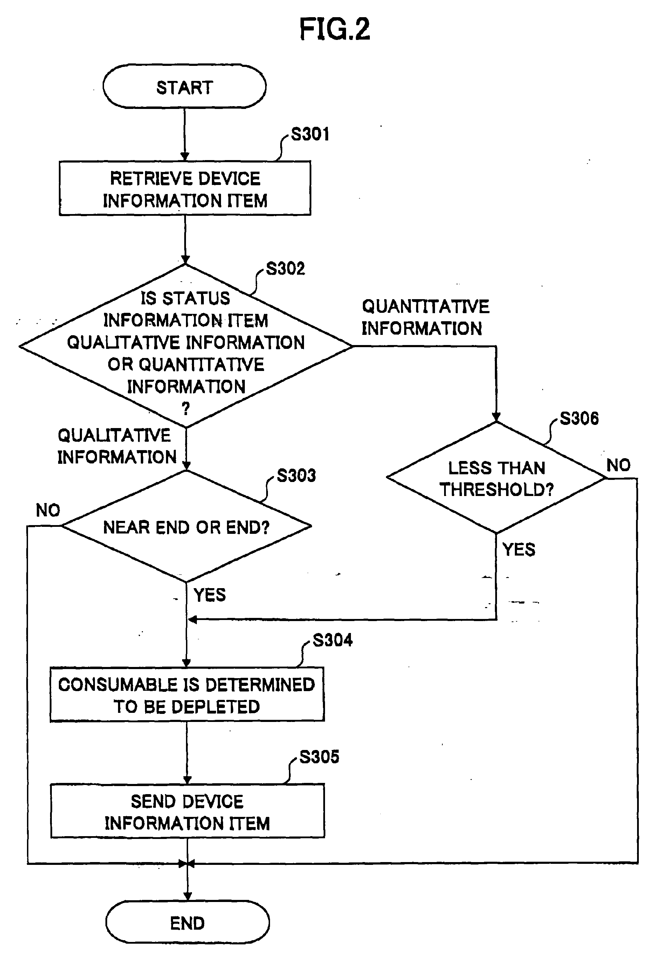

The monitoring program 21 is loaded into a memory of the client PC 20 and processed by the CPU thereof, so that the client PC 20 executes the processing described below. FIG. 2 is a flowchart showing a procedure of processing executed by the client PC 20 according to the monitoring program 21.

According to the monitoring program 21, the client PC 20 periodically retrieves a device information item (MIB information) from each device 30 (S301). The device information item includes an information item (a status information item) indicating the status of a consumable used by the device 30 such as, e.g., the toner status, the total counter value (the total number of printed pages), etc. The device information item may also include status information items indicating the status of other consumables, i.e., a fixing unit, a waste toner bottle, a photoreceptor, developer agent, etc. If the status information item of the consumable included in the retrieved device information item is qualitative information (i.e., normal/near end/end) ("qualitative information" in S302), the processing proceeds to Step S303. If the qualitative information indicates near end or end (hereinafter collectively referred to as "end") (Yes in S303), the consumable is determined to be depleted or nearly depleted (hereinafter collectively referred to as "depleted") (S304). Then, the device information item of the device 30 is sent to the ordering support server 10 (S305). If, on the other hand, the status information item included in the retrieved device information item is quantitative information, (i.e., 100%, 90%, ... 10%, 0%) ("quantitative information" in Step S302), the processing proceeds to Step S306 where it is determined whether the level of the consumable is less than a predetermined threshold (less than 30%). If the level of the consumable is determined to be less than the threshold (Yes in S306), the consumable is determined to be depleted (S304). Then, the device information item of the device 30 is sent to the ordering support server 10 (s305)

Although the client PC 20 (hereinafter also referred to as a "monitoring apparatus 20") detects depletion (the term "depletion" as used herein also refers to "near depletion") of consumables in this embodiment, the ordering support server 10 may detect depletion of consumables. In that case, the monitoring apparatus 20 sends device information items of all the devices 30. From the standpoint of reducing the network traffic, it is preferable to send only the device information item of the device 30 of which consumable depletion is detected by the monitoring apparatus 20.

The client PC 20 has installed therein a mailer 23 for sending and receiving e-mail and a Web browser 22 for browsing Web pages.

The ordering support server 10 is a general-purpose computer that provides Web server functions and has an ordering support program 11 installed therein. The ordering support program 11 may be installed from a recording medium 501 such as a CD-ROM, or may be downloaded via a network.

The ordering program 11 is loaded into a memory of the ordering support server 10 and processed by the CPU thereof, so that the ordering support server 10 executes the processing described below. According to the ordering support program 11, an e-mail creating unit (not shown) of the ordering support server 10 creates e-mail that prompts replenishment of a consumable (hereinafter referred to as a "supply") that is depleted based on a device information item received from the client PC 20, and sends the e-mail to a mail address of a pre-registered user. The e-mail contains a URL of a Web page (hereinafter referred to as a "supply order page") for ordering the supply determined to be depleted. The ordering support server 10 also returns the supply order page in response to an HTTP request sent by clicking the URL, and receives a supply ordering request from the supply order page. In response to the supply ordering request, the ordering support server 10 sends a supply ordering command to a product ordering management system (not shown).

Incidentally, the inventors of this application have been studying construction of a new business model using the ordering support system 1. The following describes the background that led the inventors to construction of a new business model.

Generally, image information apparatuses are sold through various sales channels such as distributors and retailers. In the following description, entities that purchase products (image forming apparatuses) from manufacturers and sell them directly to customers are referred to as "sellers". The sellers not only sell image forming apparatuses as hardware but also provide solutions that suit individual customers as added value and provide services such as SI (System Integration) services for making the image forming apparatuses operate in the solutions. The main profit source of these sellers includes profits from sales of the image forming apparatuses as hardware and profits from the SI services as software.

On the other hand, once the image forming apparatuses are sold, the image forming apparatuses constantly generate profits from continuous sales of supplies. The profits from the sales of supplies are generally greater than the profits from the sales of the image forming apparatuses. However, it has been common that customers (users) who purchased image forming apparatuses buy supplies from mass retailers or by mail order without going through sellers who sold the image forming apparatuses to the customers. Thus, the sellers could not obtain continuous profits from sales of supplies.

Supposing that a seller sells image forming apparatuses of a manufacturer A and a manufacturer B. If sales profits of supplies for image forming apparatuses of the manufacturer A sold by the seller are returned to the seller, this may be an incentive for the seller to sell image forming apparatuses of the manufacturer A rather than image forming apparatuses of the manufacturer B. As a result, the manufacturer A can expect sales increase of their products, and can gain an upper hand over the manufacturer B in the competition.

In view of the forgoing, the inventors of this application have developed a mechanism, as a new business model, of returning the sales profit of supplies to sellers. In the following embodiment, the ordering support system 1 is employed in this business model.

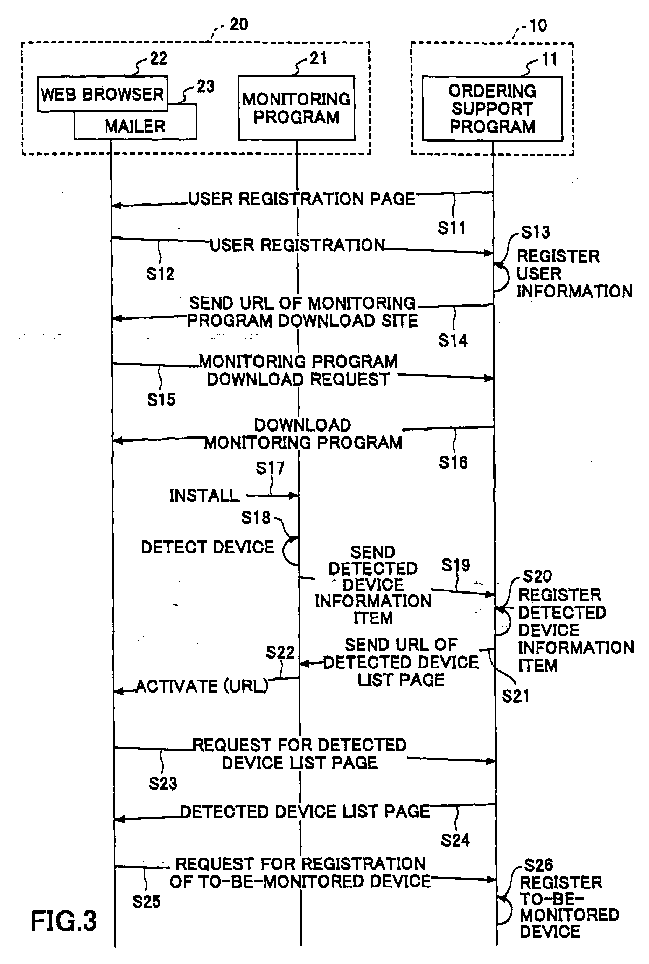

The following describes a procedure of processing in the ordering support system 1 of FIG. 1. A user who has purchased a device 30 from a seller signs a contract for registration into the ordering support system 1 with the seller. The user who has signed the registration contract performs user registration as shown in FIG. 3. As will be apparent from the following description, the user can expect reduction in cost for supply replenishment work by using the ordering support system 1. This expectation may be an incentive for the user to sign the registration contract.

FIG. 3 is a sequence diagram showing a procedure of the user registration in the ordering support system 1. In FIG. 3, the Web browser 22 is a general-purpose browser, which is installed in the client PC 20. The mailer 23 is a general-purpose mailer, which is also installed in the client PC 20.

The user gets an ID (hereinafter referred to as an "access ID") for access to the ordering support server 10 and a URL of the ordering support server 10 from the seller upon signing the registration contract, and enters the URL in the Web browser 22. In response to the entry of the URL, entry of the access ID is requested. When the access ID is entered, a Web page (hereinafter referred to as a "user registration page") for user registration is transmitted from the ordering support server 10 to the Web browser 22 (S11). The Web browser 22 receives and displays the user registration page.

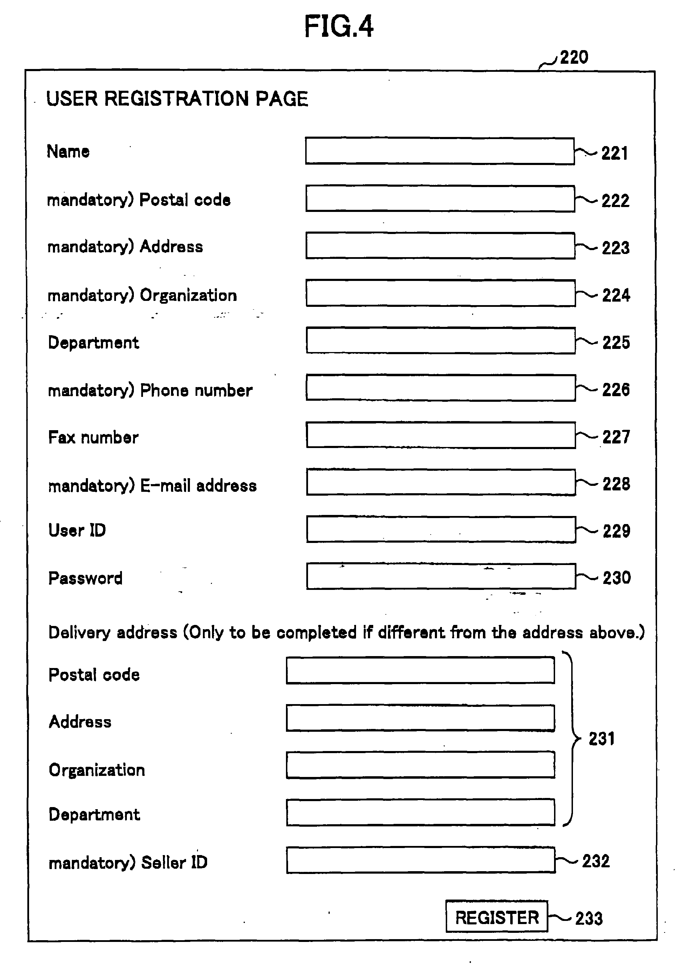

FIG. 4 is an example of the displayed user registration page. In the following description on FIG. 4, the numbers in parentheses correspond to the reference numbers shown in FIG. 4. Referring to FIG. 4, a user registration page 220 allows entry of basic information such as user name (221), postal code (222), address (223), organization name (224), department name (225), telephone number (226), Fax number (227), e-mail address (228), user ID (229), password (230), etc., entry of information about delivery address (231) to which ordered supplies are delivered such as postal code, address, organization name, and department name, and entry of seller ID (232). The seller ID is that of the seller with whom the user has signed the registration contract, and the seller lets the user know its seller ID upon signing the registration contract.

When the user enters necessary information on the user registration page 220 and clicks a REGISTER button 233, the Web browser 22 sends an HTTP request for user registration to the ordering support server 10 (S12). The HTTP request contains the information (hereinafter referred to, including the seller ID, as "user information") entered on the user registration page 220.

In response to reception of the HTTP request, the ordering support program 11 of the ordering support server 10 registers the user information contained in the HTTP request into a predetermined database (hereinafter referred to as a "user database") (S13). Then, as a response to the HTTP request, the ordering support program 11 transmits a Web page (hereinafter referred to as a "download page") containing a link to a URL of a download site of the monitoring program 21 to the Web browser 22, so that the Web browser 22 displays the download page (S14). Although the download page is requested by way of an HTTP request in this embodiment, the present invention is not so limited. For instance, the ordering support program 11 may send the link to the URL of the download site together with the user ID and password by e-mail, regular mail, or fax.

When the user clicks the URL of the download site on the download page, the Web browser 22 sends a download request for the monitoring program 21 to the ordering support server 10 (S15). In response to the request, the ordering support program 11 transmits an installation package of the monitoring program 21 stored in the ordering support server 10 to the client PC 20 (S16).

When the user installs the monitoring program 21 using the downloaded installation package, the monitoring program 21 activates on the client PC 20 (S17). It is to be noted that when installing the monitoring program 21, the user enters, on an install screen, the same user ID and password that were entered for the user registration. The entered user ID and password are encrypted and stored by the monitoring program 21.

The monitoring program 21 detects the devices 30 connected to a network 50 (S18), and sends an information item (hereinafter referred to as a "detected device information item") of each of the detected devices 30 (S19). The detected device information item includes, e.g., serial number, MAC address, model name, vendor name (name of a manufacturer of the device 30), etc. It is to be noted that detection of the devices 30 on the network 50 and retrieval of the detected device information items can be done using well-know techniques.

The ordering support program 11 registers the received detected device information items into a predetermined database (hereinafter referred to as "device database") (S20), and transmits a URL of a Web page (hereinafter referred to as a "detected device list page") that displays a list of the detected device information items to the monitoring program 21 (S21).

The monitoring program 21 activates the Web browser 22 using the received URL as an argument (S22). The Web browser 22, when activated, sends an HTTP request for the detected device list page to the ordering support server 10 based on the URL specified by the argument (S23). The ordering support program 11 generates, in response to the received HTTP request, a detected device list page based on the detected device information items registered in Step S20, and returns the detected device list page to the Web browser 22 (S24).

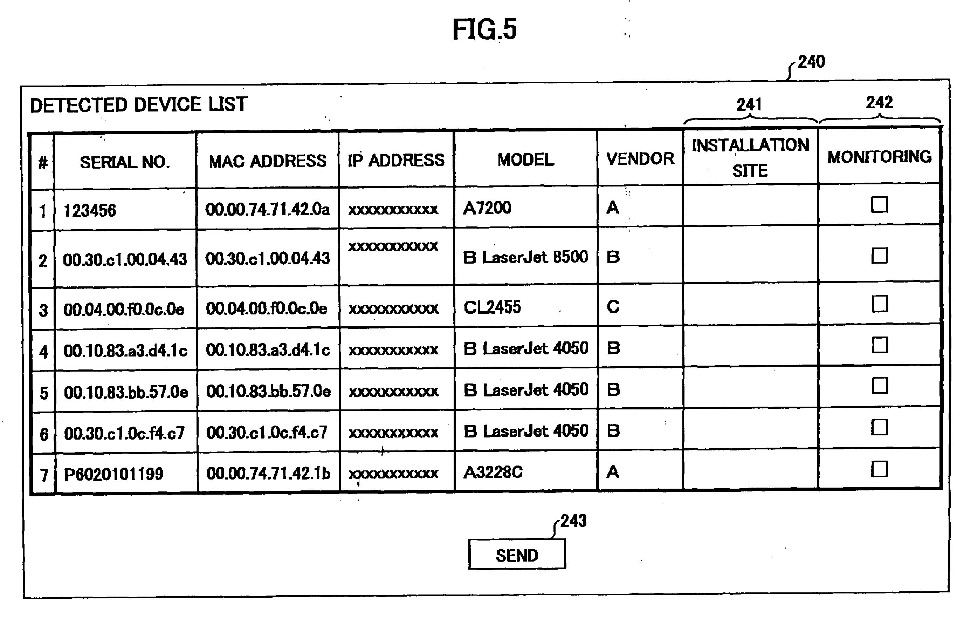

FIG. 5 is an example of the detected device list page. In the following description on FIG. 5, the numbers in parentheses correspond to the reference numbers shown in FIG. 5. As shown in FIG. 5, a detected device list page 240 shows a serial number, a MAC address, an IP address, a model name, a vendor name, etc., of each of the detected devices 30. The detected device list page 240 includes, for each device 30, a field for entering the installation site (241) and a check button (242) for selecting whether to be monitored by the monitoring program 21 (whether monitoring is required). That is, the user enters the installation site and judgment of necessity of monitoring for each device 30 on the detected device list page 240. In this embodiment, when a checkmark is displayed by clicking the check button 242, the corresponding device 30 is selected to be monitored.

When the user enters the installation site and judgment of necessity of monitoring for each device 30 on the detected device list page 240 and clicks a SEND button 243, the Web browser 22 sends an HTTP request for registration of the installation site and judgment of necessity of monitoring for each device 30 to the ordering support server 10 (S25). The ordering support program 11 adds information of the installation site and judgment of necessity of monitoring for each device 30 to the device database based on the received HTTP request (S26). It is to be noted that although the installation site is entered in this embodiment, the user may freely enter comments so as to help with consumable replacement work.

The user registration is completed with these steps. It is to be noted that the monitoring program 21 may register the detected device information items and display the detected device list so as to add a device to be monitored not only when the monitoring program 21 is installed but also when the user selects a specific menu item, for example.

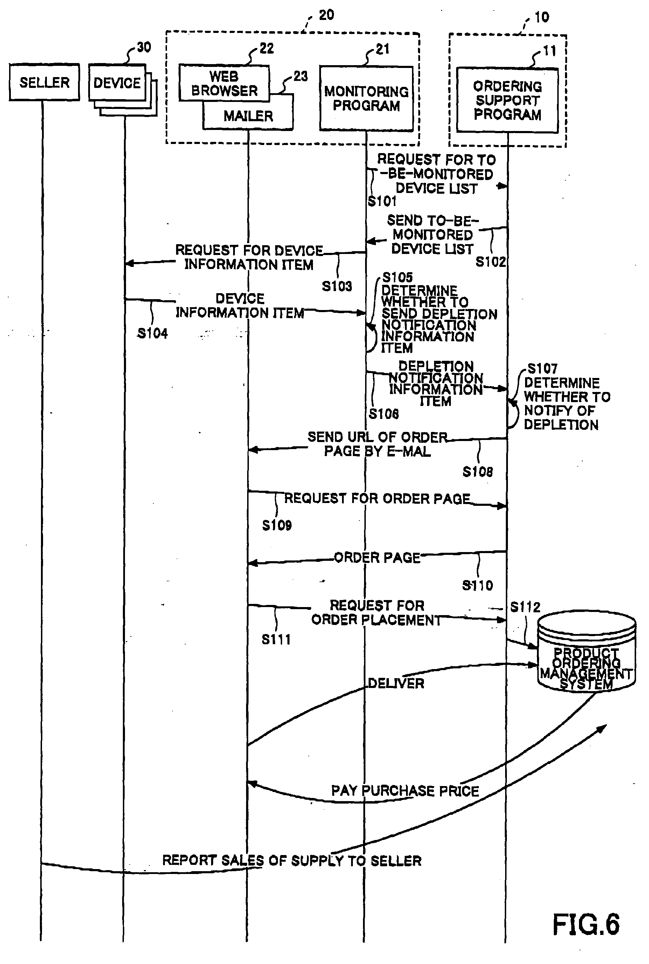

The following describes a procedure of executing periodic monitoring of the status of the devices 30 according to the monitoring program 21 installed in the client PC 20 in the ordering support system 1 FIG. 6 is a sequence diagram showing a procedure of device monitoring in the ordering support system 1.

The monitoring program 21 requests the ordering support server 10 a list of the devices (hereinafter referred to as "to-be-monitored devices") 30 to be monitored when it comes time to monitor the device status (S101). The ordering support program 11 creates a list of the to-be-monitored devices 30 based on the judgment of necessity of monitoring registered in the device database, and sends the list (to-be-monitored device list) to the monitoring program 21 (S102). It is to be noted that the monitoring program 21 may execute device monitoring not only at the status monitoring time but also when the user selects a specific menu.

The monitoring program 21 receives the to-be-monitored device list, and requests each of the devices 30 on the to-be-monitored device list for MIB information as a device information item based on the SNMP (Simple Network Management Protocol) (S103). The MIB information to be requested includes at least a status information item of toner and may include status information items of other supplies. Each device 30 sends the requested MIB information to the monitoring program 21 (S104).

In the present invention, the device information items are not limited to the MIB information. Further, the protocol for requesting the device information items is not limited to the SNMP. However, it is preferable to use standard technologies such as MIB and SNMP because using standard technologies allows retrieval of the device information items with use of the same procedure even if the devices 30 are of different vendors.

When retrieval of the device information items from all the to-be-monitored devices 30 (polling) is completed, the monitoring program 21 determines whether to send notification information of depletion based on the device information items (S105). More specifically, as described with reference to FIG. 2, in the case where the status information item of a consumable in the retrieved device information item of the device 30 is qualitative information (i.e., normal/near end/end), if the qualitative information indicates near end or end (hereinafter collectively referred to as "end"), the monitoring program 21 determines that the consumable is depleted and sends the device information item of the device 30 to the ordering support server 10 (S106). In the case where the status information item in the retrieved device information item of the device 30 is quantitative information, (i.e., 100%, 90%, ... 10%, 0%), the monitoring program 21 determines whether the level of the consumable is less than a predetermined threshold (less than 30%). If the level of the consumable is determined to be less than the threshold, the monitoring program 21 determines that the consumable is depleted and sends the device information item of the device 30 to the ordering support server 10 (S106). By "depletion of a supply" is meant also functional deterioration of a supply due to continuous use thereof. The information sent in this step is referred to as "depletion notification information item".

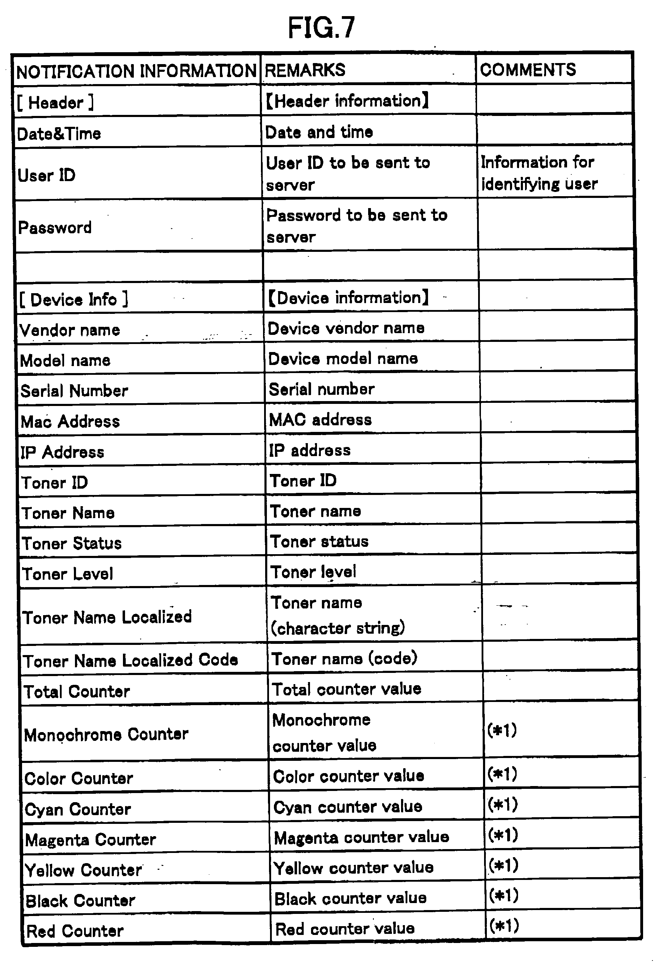

FIG. 7 is a configuration example of a depletion notification information item. As is shown in FIG. 7, the depletion notification information item comprises a header information item and a device information item.

The header information item includes date and time, user ID, and password. The date and time indicate when the device information item is transmitted. The user ID and password are those entered and stored upon installation of the monitoring program 21. That is, the header information item is not retrieved from the device 30.

The device information item is the same as that described above. More specifically, the device information item is that retrieved as the MIB information from the device 30, and includes vendor name, model name (information for identifying the device 30), serial number, MAC address, IP address, and toner ID (information for identifying a toner bottle. Color toner has toner IDs for individual colors. Monochrome toner has only one toner ID), toner name, toner status, toner level, toner name (character string), toner name (code), total counter value, etc. These information pieces are defined as public MIB (standard MIB) and are retrievable from any device of any vendor.

The toner status is information indicating the status of toner. The total counter value is information indicating the total number of printed pages. The monitoring program 21 detects a toner end based on the toner status. The monitoring program 21 also determines the remaining service life of a photoreceptor, a fixing unit, a developer, etc., based on the total counter value. The color of the toner that has reached the end cannot be specified by the toner status based on the standard MIB.

In this embodiment, in order to overcome this problem, the device information item further includes a monochrome counter value, a color counter value, a cyan counter value, a magenta counter value, a black counter value, and a red counter value. These information pieces are based on private MIB (extended MIB), which are uniquely defined by individual vendors.

For example, in this embodiment, if only devices 30 of a manufacturer A support the extended MIB, device information items of the devices 30 of the manufacturer A have values for these information pieces while device information items of devices 30 of other manufactures do not have values for these information pieces.

For example, the monochrome counter value indicates the number of pages printed in black and white. The color counter value indicates the number of pages printed in color. The cyan counter value, the magenta counter value, the black counter value, and the red counter value indicate the number of printed pages using the corresponding color toners. With these information pieces, it is possible to detect the toner end of each color in the devices 30 of the manufacturer A.

Although the information shown in FIG. 7 is sent as the depletion notification information item, the present invention is not limited thereto. The information to be sent is appropriately determined according to need.

It is to be noted that a depletion notification information item as shown in FIG. 7 is sent to the ordering support program 11 one for each of the devices 30 depletion of any supply of which is detected.

The ordering support program 11, when receives the depletion notification information item, identifies the depleted supply, and determines whether to notify the user of the depletion (S107). Since there is a possibility that the depletion notification information item is redundantly sent, this determination processing is performed to avoid redundantly notifying the user of the depletion. The details of the determination processing are described below.

When the depletion notification information item is not determined to be redundant, the ordering support program 11 generates a Web page (hereinafter referred to as an "order page") for ordering a replacement of the depleted supply, creates e-mail (hereinafter referred to as "depletion notification mail") that notifies of the depletion of the supply, and sends the depletion notification mail to the mail address of the user (S108). The depletion notification mail includes a URL of the order page. Each depletion notification mail is provided with an ID (hereinafter referred to as a "mail ID"). Together with the mail ID, information for identifying the device 30 that is the subject of the depletion notification mail such as a serial number of the device 30, information for identifying the user such as a user ID or a mail address, sent date and time, etc., are stored as a transmission history of depletion notification mail.

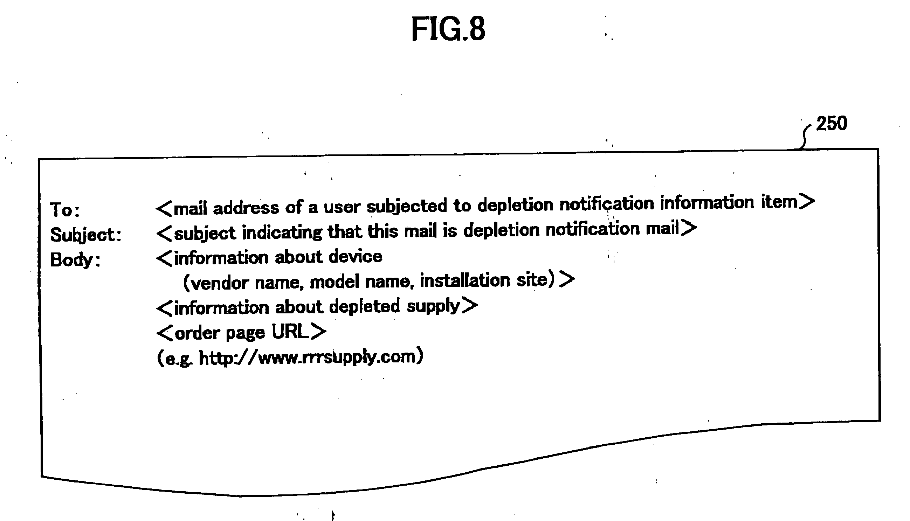

FIG. 8 is an example of notification mail. In a notification mail 250 shown in FIG. 8, character strings in angle brackets are not specific values but indicate type of information to be written therein.

With reference to FIG. 8, as the destination of the depletion notification mail 250, the mail address of the user affected by the depletion notification information item is written. The mail address of the user may be detected by searching the user database using the user ID and password included in the depletion notification information item. In the user database, the mail address is registered together with the user ID and the password upon user registration.

As the subject of the depletion notification mail 250, the subject indicating that this is depletion notification mail is written. As the body of the depletion notification mail 250, information about the device that is the subject of the depletion notification information item, information about the depleted supply, the URL of the order page, etc., are written.

The information about the device includes the name of the vendor, the model name, the installation site, etc., of the device 30. These pieces of information may be retrieved from the device database using, as keys, the serial number, the MAC address, the IP address, etc., that are included in the depletion notification information item. As the information about the depleted supply, in the case where the supply is a toner, for example, the toner status, the toner ID, the toner name, etc., are written.

If a single device 30 is low on plural supplies at the same time, single notification mail 250 including information indicating depletion of the supplies is created so as to report that the depletion of the supplies.

The user views the depletion notification mail 250 through the mailer 23 in the client PC 20 and can recognize the depletion of the supply even when not executing a printing operation or the like. The user can also easily identify the installation site, etc., of the device 30 that is low on the supply.

When the user clicks the URL of the order page written in the depletion notification mail 250, the mailer 23 activates the Web browser 22 using the clicked URL as an argument. The Web browser 22, when activated, sends an HTTP request for the order page to the ordering support server 10 based on the URL specified by the argument (S109). The ordering support program 11 returns, in response to the received HTTP request, the order page to the Web browser 22 (S110). The Web browser 22 displays the received order page.

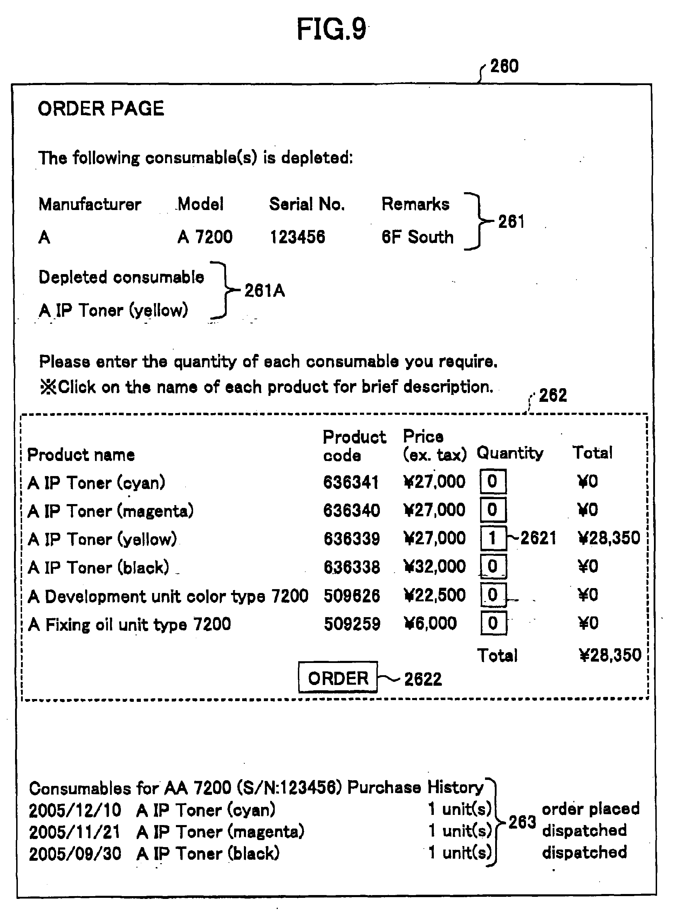

FIG. 9 is an example of a displayed order page. On an order page 260 of FIG. 9, a field 261 shows the information about the device of which the supply is depleted (manufacturer (vendor) name, model name, serial number, and remarks (installation site)). A field 261A shows the name of the depleted supply. A field 262 shows a list of supplies for the device, and the supplies can be ordered therefrom. More specifically, the field 262 shows name of products, the quantity of purchase of each which can be entered therein. As indicated by the reference number 2621, the depleted supply is shown with the required quantity entered in advance. Each product name is linked to a Web page that shows brief description thereof. Further, a field 263 shows past purchase history of the user. This prevents redundant purchase by the user.

It is to be noted that the purchase history is registered on a per-user basis. That is, when the product is ordered through the order page 260, information of the ordered product is added to the user database.

The order page 260 of FIG. 9 shows that a yellow toner is depleted. As mentioned above, the color of the depleted toner cannot be specified only with information based on the standard MIB. Therefore, the information indicating the depletion of yellow toner on the order page 260 of FIG. 9 is determined based on the extended MIB information. In this way, a manufacturer that runs the ordering support system 1 can differentiate itself from other manufacturers in the service offered through the ordering support system 1 with use of the uniquely defined extended MIB. That is, if a toner depletion in a device 30 of a competitor is detected, the color of the toner cannot be specified on the order page 260. It is to be noted that, although supplies for devices 30 of other manufacturers can be excluded from supplies that can be ordered in the ordering support system 1, the supplies for the devices 30 of other manufacturers can be ordered for user convenience in this embodiment.

On the order page 260, when the user clicks an ORDER button 2622, the Web browser 22 sends an HTTP request for placing a product order (S111).

In response to the HTTP request, the ordering support program 11 records information for giving a part of profit resulting from the order request to the seller associated with the user (S112) More specifically, each seller is provided with a database (hereinafter referred to as "seller database") for managing sales of supplies through the ordering support system 1 so that the details (e.g. order amount) of each order are recorded into the corresponding seller database. It is to be noted that each seller signs a participation agreement into the ordering support system 1 with the manufacturer so as to have an entry into the seller database. Further, each seller is provided with a seller ID so as to be identified in the ordering support system 1 with the seller ID. It is to be noted that, in Step S112, the user related to the received HTTP request may be identified by, for example, associating a session ID for the Web browser 22 with the user ID in advance and identifying the user ID based on the session ID with which the user ID is associated.

The ordering support program 11 then submits an instruction for processing this order to the product ordering management system. The instruction includes information about the delivery address registered in the user database. When the instruction is submitted to the product ordering support system, the ordered product is delivered to the user. Then, when the user pays the purchase price, information indicating the settlement of the sales based on this order is recorded into the seller database. In response to the sales settlement, the manufacturer may give the seller a bonus such as incentive pay corresponding to the sales.

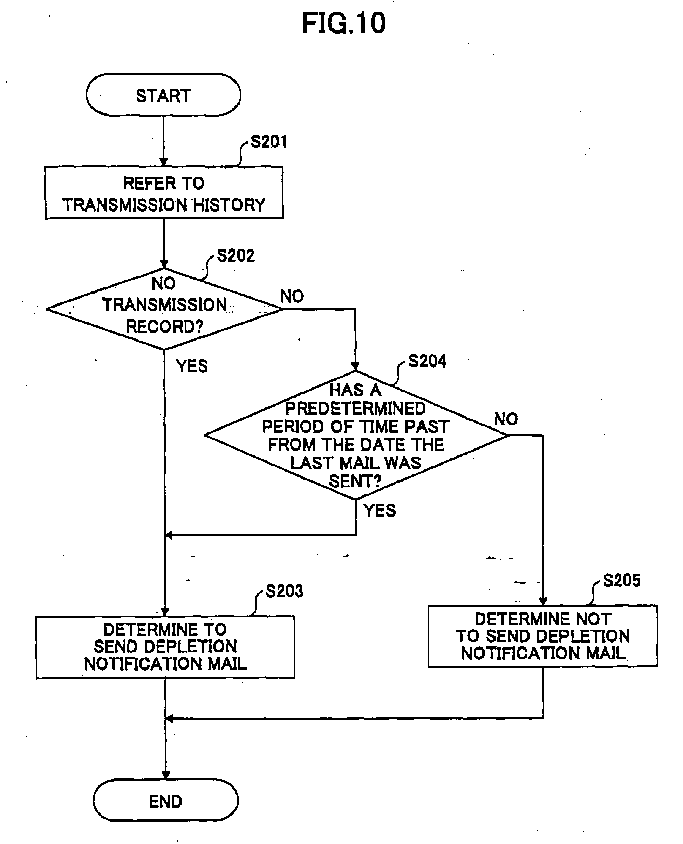

The following describes the processing in Step S107 of FIG. 6 in greater detail. FIG. 10 is a flowchart showing a procedure of determining whether to send depletion notification mail. The following describes the significance of this processing.

The monitoring program 21 periodically interrogates the devices 30 to retrieve device information items so as to determine the status of supplies based on the device information items. If a depletion of any supply is detected as a result of the interrogation, the monitoring program 21 sends a depletion notification information item to the ordering support program 11. in this mechanism, if, for example, the supply of a device 30 of which depletion has been already detected is not replaced within a polling cycle of the monitoring program 21, the monitoring program 21 detects again the depletion of the supply of the same device 30. As another example, a toner end is sometimes detected although toner is still remaining in a toner bottle. If a user shakes the toner bottle and re-sets the same toner bottle, the toner end of this toner is likely to be detected again soon afterward. In these cases, a depletion notification is redundantly sent to the user, so that the user places a redundant order if the user does not notice the redundancy. In order to avoid occurrence of such an event, the ordering support system 1 performs the following processing. Based on the serial number of the device 30 included in the depletion notification information item received from the monitoring program 21, the date and time of the last (the previously sent) depletion notification mail are reviewed by referring to a transmission history of depletion notification mail (S201).

If there is no transmission record of depletion notification mail to the device 30 in the transmission history (Yes in S202), depletion notification mail is determined to be sent (S203). This is because the device 30 has never received depletion notification mail and there is no possibility of redundancy of depletion notification mail.

If there is a transmission record of depletion notification mail to the device 30 in the transmission history (No in S202), it is determined whether a predetermined period of time has passed from the date and time the last depletion notification mail was sent (S204). If a predetermined period of time has passed, depletion notification mail is determined to be sent (S203). If a predetermined period of time has not past, depletion notification mail is not determined to be sent because there is a possibility of redundancy (S205).

Although determination is made based on time passage in the embodiment illustrated in FIG. 10, the present invention is not so limited. For example, in an alternative embodiment, a value of the total counter may be recorded upon each transmission of depletion notification mail, and it is determined not to send depletion notification mail if the difference of the total counter value from the last recorded value is less than a predetermined threshold. In another alternative embodiment, all the transmission records are deleted from the transmission history, and it is determined not to send new depletion notification mail if a transmission record of depletion notification mail to the device 30 to which the new depletion notification mail is going to be sent is present in the transmission history.

As described above, the ordering support system 1 of this embodiment of the present invention can provide convenience and benefits to each of the three parties: users of the devices 30 (customers), a seller, and a manufacturer.

That is, depletion of a supply in the device 30 is automatically detected, and depletion notification mail is automatically sent to a user terminal. The user clicks the URL provided in the depletion notification mail to display the order page 260, and can easily place an order of a replacement of the depleted supply from the order page 260. Thus, the user does not have to go through troubles of specifying a supply compatible with the device 30 and going to a shop to buy the supply. This can reduce costs of getting the supply.

The seller can obtain a part of profits from sales of supplies, thereby expanding the profit source.

The manufacturer can give incentives to the seller to sell devices of this manufacturer rather than devices of competitors, and give incentives to the users to buy its devices. This is because if the manufacturer applies a higher return rate to its supplies sold through the ordering support system 1 than return rates of supplies of competitors or if the manufacturer applies a return rate of zero to supplies of competitors, the seller can have more profits from the sales of the supplies of this manufacturer. This is also because if the users purchase the device of this manufacturer, fine-tuned services such as specifying the color of depleted toner can be expected.

Moreover, the manufacturer can roughly estimate the useful service life of each device 30 by accumulating device information items. Thus, the manufacturer can effectively link the ordering support system 1 with sales activities such as promotion for replacing an old device 30 with a new device 30.

Although, in the above embodiment, the user signs the contract for registration into the ordering support system 1 with the seller who has sold the device 30 to the user, the party with whom the user signs the registration contract is not limited to the seller who has sold the device 30. The manufacturer may give a seller ID to an entity that does not sell devices 30. In such a case, the entity can receive return of sales profits of supplies sold through the ordering support system 1 regardless of the sales of devices 30.

While the present invention is described in terms of preferred embodiments, it is apparent to those skilled in the art that variations and modifications may be made without departing from the scope of the invention as set forth in the accompanying claims.

## Claims

1. An ordering support system
**characterized by**:
a device monitoring apparatus that retrieves a device information item about a device connected to a network and a status information item about a consumable of the device, determines whether the consumable is depleted based on the status information item, and sends, if the consumable is determined to be depleted, the device information item and the status information item to an ordering support apparatus; and
the ordering support apparatus that receives the device information item and the status information item from the device monitoring apparatus, creates an electronic mail message including a URL indicating a Web page for ordering the consumable determined to be depleted, and sends the electronic mail message to a pre-registered mail address associated with the device.

2. An ordering support system
**characterized by**:
a device monitoring apparatus that retrieves a device information item about a device connected to a network and a status information item about a consumable of the device, and sends the device information item and the status information item to an ordering support apparatus; and
the ordering support apparatus that receives the device information item and the status information item from the device monitoring apparatus, determines whether the consumable is depleted based on the status information item, creates, if the consumable is determined to be depleted, an electronic mail message including a URL indicating a Web page for ordering the consumable determined to be depleted, and sends the electronic mail message to a pre-registered mail address associated with the device.

3. The ordering support system as claimed in claim 1 or 2, **characterized in that** the consumable is a supply for use in an image forming apparatus.

4. The ordering support system as claimed in claim 1 or 2, **characterized in that** the consumable is a toner for use in an image forming apparatus.

5. The ordering support system as claimed in any one of the preceding claims, **characterized in that** the status information item about the consumable includes qualitative information and quantitative information.

6. The ordering support system as claimed in any one of claims 1 to 5, **characterized in that**, in response to a send request for the Web page transmitted based on the URL included in the electronic mail message, the ordering support apparatus returns the Web page.

7. The ordering support system as claimed in any one of claims 1 to 6, **characterized in that** the ordering support apparatus
records, as transmission history, information about each sent electronic mail message, including identification information of the device to which the electronic mail message is related and information of date and time the electronic mail message is sent;
determines, upon reception of the status information item about the consumable of the device, whether an electronic mail message related to the same device has been sent within a predetermined period of time based on the transmission history; and
does not send, if an electronic mail massage related to the same device has been sent within the predetermined period, another electronic mail message related to the same device.

8. The ordering support system as claimed in any one of claims 1 to 6, **characterized in that** the ordering support apparatus records, as transmission history, information about each sent electronic mail message, including identification information of the device to which the electronic mail message is related and information, which is contained in a status information item about a consumable of the device, indicating the number of times that a predetermined function of the device is used;
determines, upon reception of the status information item, whether the difference of the number of times between now and the last recorded number of times that the function of the same device has been used is within a predetermined range based on the transmission history; and
does not send, if the difference of the number of times is within the predetermined range, an electronic mail message related to the same device.

9. The ordering support system as claimed in any one of claims 1 to 8, **characterized in that** the ordering support apparatus
stores, based on an order request for the consumable sent through the Web page, a purchase history of the consumable on a per-user basis; and
sends, in response to a send request for the Web page transmitted based on the URL included in the electronic mail message, the Web page containing the purchase record of a user related to the send request.

10. The ordering support system as claimed in any one of claims 1 to 9, **characterized in that**, based on an order request for the consumable sent through the Web page, the ordering support apparatus records information for providing a part of profit resulting from the order request to a pre-registered seller associated with a user related to the order request.

11. The ordering support system as claimed in any one of claims 1 to 10, **characterized in that** the device monitoring apparatus detects plural of the devices connected thereto through the network so that one or more of the devices to be monitored is selected from the detected devices, and retrieves the device information item and the status information item from the selected device.

12. The ordering support apparatus in the ordering support system of any one of claims 1 to 11.

13. The device monitoring apparatus in the ordering support system of any one of claims 1 to 11.

14. An ordering support method executable by a computer, **characterized by**:
a status information item receiving step of receiving, from a device monitoring apparatus that retrieves a device information item about a device connected to a network and a status information item about a consumable of the device and determines whether the consumable is depleted based on the status information item, the device information item and the status information item related to the consumable determined to be depleted; and
a mail sending step of creating an electronic mail message including a URL indicating a Web page for ordering the consumable to which the received status information is related, and sending the electronic mail message to a pre-registered mail address associated with the device.

15. An ordering support method executable by a computer, **characterized by**:
a status information item receiving step of receiving a device information item about a device connected to a network and a status information item about a consumable of the device; and
a mail sending step of determining whether the consumable is depleted based on the received status information item, creating, if the consumable is determined to be depleted, an electronic mail message including a URL indicating a Web page for ordering the consumable determined to be depleted, and sending the electronic mail message to a pre-registered mail address associated with the device.

16. The ordering support method as claimed in any one of claims 14 to 15, further **characterized by**:
a Web page sending step of sending the Web page in response to a send request for the Web page transmitted based on the URL included in the electronic mail message.

17. The ordering support method as claimed in any one of claims 14 to 16, further **characterized by**:
a transmission history recording step of recording, as transmission history, information about each sent electronic mail message, including identification information of the device to which the electronic mail message is related and information of date and time the electronic mail message is sent;
wherein it is determined, upon reception of the status information item about the consumable of the device, whether an electronic mail message related to the same device has been sent within a predetermined period of time based on the transmission history, and if an electronic mail massage related to the same device has been sent within the predetermined period, another electronic mail message related to the same device is not sent.

18. The ordering support method as claimed in any one of claims 14 to 16, further **characterized by**:
a transmission history recording step of recording, as transmission history, information about each sent electronic mail message, including identification information of the device to which the electronic mail message is related and information, which is contained in a status information item about a consumable of the device, indicating the number of times that a predetermined function of the device is used;
wherein it is determined, upon reception of the status information item, whether the difference of the number of times between now and the last recorded number of times that the function of the same device has been used is within a predetermined range based on the transmission history, and if the difference of the number of times is within the predetermined range, an electronic mail message related to the same device is not sent.

19. The ordering support method as claimed in any one of claims 14 to 18, further **characterized by**:
a purchase history storing step of storing, based on an order request for the consumable sent through the Web page, a purchase history of the consumable on a per-user basis;
wherein the Web page sending step sends, in response to a send request for the Web page transmitted based on the URL included in the electronic mail message, the Web page containing the purchase record of a user related to the send request.

20. The ordering support method as claimed in any one of claims 14 to 19, **characterized in that**, based on an order request for the consumable sent through the Web page, information for providing a part of profit resulting from the order request to a pre-registered seller associated with a user related to the order request is recorded.

21. A device monitoring method executable by a computer, **characterized by**:
a status information item retrieving step of retrieving a device information item about a device connected to a network and a status information item about a consumable of the device;
a determining step of determining whether the consumable is depleted; and
a status information item sending step of sending the device information item and the status information item related to the consumable determined to be depleted to a predetermined computer.

22. The device monitoring method as claimed in any one of claims 14 to 21, **characterized in that** the consumable is a supply for use in an image forming apparatus.

23. The device monitoring method as claimed in any one of claims 14 to 22, **characterized in that** the consumable is a toner for use in an image forming apparatus.

24. The device monitoring method as claimed in claim 23, **characterized in that** the status information item about the consumable includes qualitative information and quantitative information.

25. The device monitoring method as claimed in any one of claims 21 to 24, further **characterized by**:
a device detecting step of detecting devices connected to the network;
a to-be-monitored device selecting step of selecting a device to be monitored from the detected devices; and
wherein, in the status information item retrieving step, the device information item and the status information item are retrieved from the device selected in the to-be-monitored device selecting step.

26. A computer-readable medium having a program embodied therein, the program causing a computer to execute the method according to any one of claims 14 to 25.
